Europäisches Patentamt

(19) European Patent Office

Office européen des brevets

(11) Numéro de publication : **0 210 889**
**B1**

(12) **FASCICULE DE BREVET EUROPÉEN**

(45) Date de publication du fascicule du brevet :
03.01.90

(21) Numéro de dépôt : 86401411.3

(22) Date de dépôt : 26.06.86

(51) Int. Cl.⁵ : **H 04 M 11/04, G 08 B 19/00**

(54) **Centrale modulaire de surveillance et d'alarme de haute sécurité, et procédé de fonctionnement correspondant.**

(30) Priorité : 27.06.85 FR 8509781

(43) Date de publication de la demande :
04.02.87 Bulletin 87/06

(45) Mention de la délivrance du brevet :
03.01.90 Bulletin 90/01

(84) Etats contractants désignés :
AT BE CH DE GB IT LI LU NL SE

(56) Documents cités :
EP–A– 0 050 732
FR–A– 2 452 833
GB–A– 2 016 770
US–A– 4 450 320
US–A– 4 455 551
US–A– 4 465 904
IEEE TRANSACTIONS ON CONSUMER ELECTRO-
NICS, vol. CE-29, no. 1, février 1983, pages 1-8, IEEE,
New York, US; E. BRUGGEMAN et al.: "A multifunction home control system"

(73) Titulaire : AZUR ELECTRONIQUE SERVICE Société à
Responsabilité Limitée
Parc Industriel les Bois de Grasse
F-06130 Grasse (FR)

(72) Inventeur : Fournier, Olivier
Le Riou Route de Nice
F-06130 Grasse (FR)
Inventeur : Giraud, Robert
Lotissement de Clavary Chemin de Clavary
F-06810 Auribeau-sur-Siagne (FR)

(74) Mandataire : Rodhain, Claude et al
Cabinet Claude Rodhain 30, rue la Boétie
F-75008 Paris (FR)

Il est rappelé que : Dans un délai de neuf mois à compter de la date de publication de la mention de la délivrance du
brevet européen toute personne peut faire opposition au brevet européen délivré, auprès de l'Office européen des
brevets. L'opposition doit être formée par écrit et motivée. Elle n'est réputée formée qu'après paiement de la taxe
d'opposition (Art. 99(1) Convention sur le brevet européen).

**Description**

L'invention concerne le domaine des centrales de surveillance et d'alarme, du type de celles employées pour protéger un magasin ou un domicile aussi bien contre les effractions que contre les dangers tels que l'incendie ou même les inondations.

L'invention se rapporte en outre au domaine des centrales de ce type les plus perfectionnées, c'est-à-dire susceptibles de gérer la surveillance à partir de nombreux capteurs, très différents les uns des autres, et comportant plusieurs systèmes d'alarme.

On connaît déjà un système d'alarme programmable (brevet US-A-4 465 904) du type comprenant un communicateur local muni d'un ou plusieurs capteurs de « problèmes ». Le communicateur comprend un système de numérisation et d'envoi de l'information par ligne téléphonique jusqu'à un récepteur central, dans lequel sont affichés la localisation de la résidence surveillée et le « problème » rencontré. Ce système utilise une unité de programmation qui est déconnectable du système. Cette unité de programmation sert notamment à contrôler la nature de sortie du récepteur central, et peut également être utilisée pour programmer d'autres systèmes du même type. Si l'unité de programmation permet une certaine souplesse d'utilisation, ce type de système d'alarme présente des points faibles de protection.

De même, parmi les centrales de surveillance et d'alarme sophistiquées connues, certaines sont ainsi équipées d'un certain nombre de bornes d'entrée destinées au branchement des capteurs de surveillance, chacune de ces bornes d'entrée correspondant à un type de capteur déterminé (par exemple un capteur normalement ouvert —NO— ou normalement fermé —NF—, etc). Lorsque l'un des capteurs connecté détecte un danger ou une effraction, le signal de détection est analysé par un processeur central, par exemple un micro-processeur électronique, qui à son tour déclenche une alarme sonore, visuelle, ou autre, en fonction de la manière dont la centrale a été préprogrammée.

De manière connue, lorsque l'un des capteurs envoie un signal d'alarme, la centrale peut composer automatiquement un numéro de téléphone, et informer le correspondant de la nature du danger au moyen d'un signal sonore particulier.

Dans un mode de réalisation très élaboré, le signal sonore peut être un enregistrement d'une phrase complète fournissant de manière intelligible le message d'alarme. Ce message vocal d'alarme peut d'ailleurs être formé par un système de reconstitution de paroles à partir de mots ou de syllabes préenregistrées.

Dans certains appareils connus, l'unité d'émission des messages vocaux sert également à guider l'utilisateur pour l'emploi de son appareil.

Toutefois, malgré leur sophistication, ces appareils présentent un certain manque de souplesse d'utilisation, ainsi que des points faibles de protection.

Ainsi, la pré-programmation de ces appareils connus est le plus souvent rigidement définie lors de leur fabrication, et l'utilisateur doit se plier à la configuration proposée par le constructeur, à savoir : le nombre de capteur NO et NF prévus, le type d'alarme associé à chaque borne d'entrée ou encore les caractéristiques du processus d'alarme pour chaque zone de surveillance (temporisations, zones éjectables, zones techniques). Il est clair que ce manque de souplesse rend ces appareils connus inadaptés à de nombreux cas d'utilisation pour lesquels il aurait par exemple été utile de disposer d'une ou deux bornes supplémentaires correspondant à tel ou tel type de capteur.

L'inconvénient majeur de ces appareils est toutefois que, malgré l'existence d'un certain nombre de dispositifs tels que les « chiens de garde », ou encore les procédures de « chant du cygne », ils sont encore relativement vulnérables à des opérations de déprogrammation. Ceci est particulièrement vrai dans le cas d'appareils à mémoire du type mémoires RAM, qui sont dépendantes d'une source d'énergie généralement extérieure à la mémoire, et sont relativement aisément déprogrammables par micro-coupures ou parasitage, même lorsque la source d'énergie est intégrée à la mémoire.

En outre, dans le cas où l'appareil est conçu pour fournir un message d'alarme téléphoné, ces appareils deviennent bien évidemment inopérationnels lorsque le malfaiteur a réussi à couper les fils du téléphone avant qu'un capteur d'alarme soit déclenché.

Enfin, la vulnérabilité des centrales connues est également liée au fait que leur tableau de commande doit bien évidemment être accessible, pour en permettre la mise en route, et éventuellement la programmation. Jusqu'à présent, ce tableau de commande est monté sur le boîtier principal de la centrale d'alarme et de surveillance, et son accès est protégé le plus souvent au moyen d'une porte verrouillable. Or, quand bien même le dispositif de verrouillage serait suffisant pour résister à une tentative d'ouverture forcée, l'existence de la porte de verrouillage permet de localiser immédiatement la centrale qui se trouve derrière, et par exemple d'exercer un parasitage de type électronique qui en neutralise le fonctionnement. D'autre part et surtout, chaque intervention sur la centrale, que ce soit pour la mettre en marche ou en modifier les paramètres de fonctionnement, suppose une intervention physique sur ce même tableau de commande, ce qui en fait est rendu extrêmement difficile voire impossible dans les cas d'urgence, par exemple lorsqu'on souhaite enclenché un système d'alerte et d'appel à l'aide au cours d'une agression, d'une façon immédiate et discrète.

En conséquence, l'objet de la présente invention est de fournir une centrale de surveillance et d'alarme qui permette de pallier le manque de souplesse et la vulnérabilité des centrales existantes tels que soulignés ci-dessus.

En particulier, un premier objet est de fournir une telle centrale qui soit programmable et commandable à tous moments et en tous lieux par l'utilisateur, de façon qu'il contrôle parfaitement ses conditions de protection, et dispose ainsi d'un dispositif de protection de très haute sécurité.

Un second objet de l'invention est de permettre de noyer complètement l'ensemble principal de la centrale de surveillance et d'alarme en supprimant la nécessité de toute intervention directe sur celle-ci, de façon à en empêcher complètement la localisation.

Un autre objet de l'invention est de permettre l'enclenchement ou la neutralisation à distance de la centrale de surveillance et d'alarme par l'utilisateur, et par lui seul, par exemple lorsqu'il vient de quitter le bâtiment protégé, ou lorsqu'il veut y pénétrer à nouveau, respectivement.

L'invention permet ainsi de remplacer avantageusement les systèmes de temporisation d'entrée ou de temporisation de sortie existants, qui dans certains cas sont d'une utilisation et d'un fonctionnement extrêmement contraignants.

Un objet complémentaire de l'invention est de renforcer l'invulnérabilité de l'ensemble principal de la centrale de surveillance et d'alarme, (d'ores et déjà dérobée aux regards), en la munissant de systèmes de mémorisation hautement fiables, et résistant parfaitement aux coupures d'alimentation, aux micro-coupures et au parasitage.

De plus, dans sa version de téléalarme par téléphone, l'invention permet d'assurer cette fonction même dans le cas où tous les câbles téléphoniques ont été coupés.

Enfin, un autre objet de l'invention consiste à fournir une centrale de surveillance et d'alarme complètement configurable, pour en permettre l'adaptation aux exigences de protection particulières de chaque utilisateur, sans que cela entrave la qualité de la protection assurée, ou le niveau d'invulnérabilité de la centrale.

Plus précisément, l'invention concerne donc le domaine des centrales de surveillance et d'alarme, assurant notamment l'asservissement d'un appareillage ou d'une alarme en réponse à une effraction, un danger et/ou un ordre préprogrammé, du type comprenant :

— une mémoire d'enregistrement de paramètre de surveillance,

— un capteur de surveillance et/ou d'alarme informant sur l'état d'une zone de surveillance,

— des moyens d'émission d'un signal de commande et/ou d'alarme actionnés par un processeur central en fonction desdits paramètres de surveillance enregistrés et à partir des informations fournies par lesdits capteurs, ladite centrale comportant en outre :

— des moyens de programmation, par l'utilisateur, desdits paramètres de surveillance contenus dans ladite mémoire selon un processus de guidage pas à pas et interactif de l'utilisateur,

— et une unité de reconstitution de paroles coopérant d'une part avec les moyens d'émission d'un signal d'alarme pour associer à chaque signal un message vocal d'alarme, et d'autre part avec lesdits moyens de programmation pour assurer le guidage de l'utilisateur par message vocal de guidage.

La centrale de surveillance et d'alarme selon l'invention est caractérisée en ce que :

— les moyens de programmation desdits paramètres de surveillance comprennent un boîtier indépendant et portable de télécommande et de programmation rapprochées, comportant un clavier pour la composition des ordres de commande et de programmation, un système d'émission/réception par ondes électromagnétiques et/ou lumineuses et/ou sonores pour la communication entre lesdits boîtiers et l'ensemble principal de la centrale, et un haut-parleur délivrant les messages vocaux de guidage en provenance de l'ensemble principal de la centrale.

Selon une autre caractéristique de l'invention, la centrale de surveillance et d'alarme de haute sécurité ainsi définie comporte également une unité de mise en communication automatique par au moins une ligne téléphonique avec au moins un correspondant, ladite unité comprenant d'une part des moyens d'appel d'un correspondant et l'émission téléphonique desdits messages vocaux d'alarme et/ou de guidage, et d'autre part des moyens de réception téléphonique d'ordre de commande et de programmation en provenance d'au moins un correspondant.

L'invention est également relative à un procédé de fonctionnement d'une centrale de surveillance et d'alarme de ce type, caractérisé en ce que toutes les fonctions de neutralisation et de mise en activité sélectives des zones de surveillance sont accessibles à partir dudit boîtier indépendant et portable de télécommande et de téléprogrammation rapprochées.

Selon une caractéristique complémentaire de l'invention, le procédé de fonctionnement de ladite centrale comprend un processus de programmation de ladite mémoire d'enregistrement des paramètres de surveillance incluant les étapes suivantes :

— on configure chacune des zones de surveillance de façon à lui attribuer un niveau de protection (protection simple temporaire, haute protection permanente, ...), et un type de protection (temporisation d'entrée ou de sortie, zone technique et/ou éjectable, ...), ladite configuration étant effectuée par intervention directe sur l'ensemble principal de la centrale avant d'escamoter complètement ledit ensemble principal, voire de le rendre parfaitement inaccessible ;

— on enregistre la position repos de chacun des capteurs d'alarme des zones de surveillance en plaçant simultanément chacune desdites zones de surveillance dans leur état physique nominal (c'est-à-dire correspondant à l'absence d'effraction ou de danger), ledit enregistrement étant effectué par intervention directe sur l'ensemble principal de la centrale, avant que celui-ci soit complètement escamoté, voire rendu parfaitement inaccessible ;

— on verrouille et/ou escamote l'ensemble principal de la centrale, de façon à protéger l'accès aux moyens de programmation de ladite mémoire, le déverrouillage n'étant possible qu'après avoir composé un numéro de code sur ledit boîtier indépendant et portable de télécommande et de téléprogrammation rapprochées ;

— on commande la mise en activité ou la mise hors surveillance de chacune des zones de surveillance au moyen dudit boîtier indépendant et portable, soit par indication globale du niveau de protection souhaitée (protection complète, haute protection sélective permanente), soit par validation sélective de chacune des zones, ces opérations étant guidées par les messages vocaux émis par le haut parleur dudit boîtier indépendant et portable.

D'autres caractéristiques et avantages de l'invention apparaîtront à la lecture de la description suivante de modes de réalisation préférentiels de l'invention, et des dessins annexés dans lesquels :

— la Fig. 1 représente un schéma illustrant les différentes fonctions de la centrale ;

— la Fig. 2 représente une vue détaillée de la face de commande du boîtier indépendant et portable de télécommande et de téléprogrammation de la centrale de surveillance et d'alarme selon l'invention.

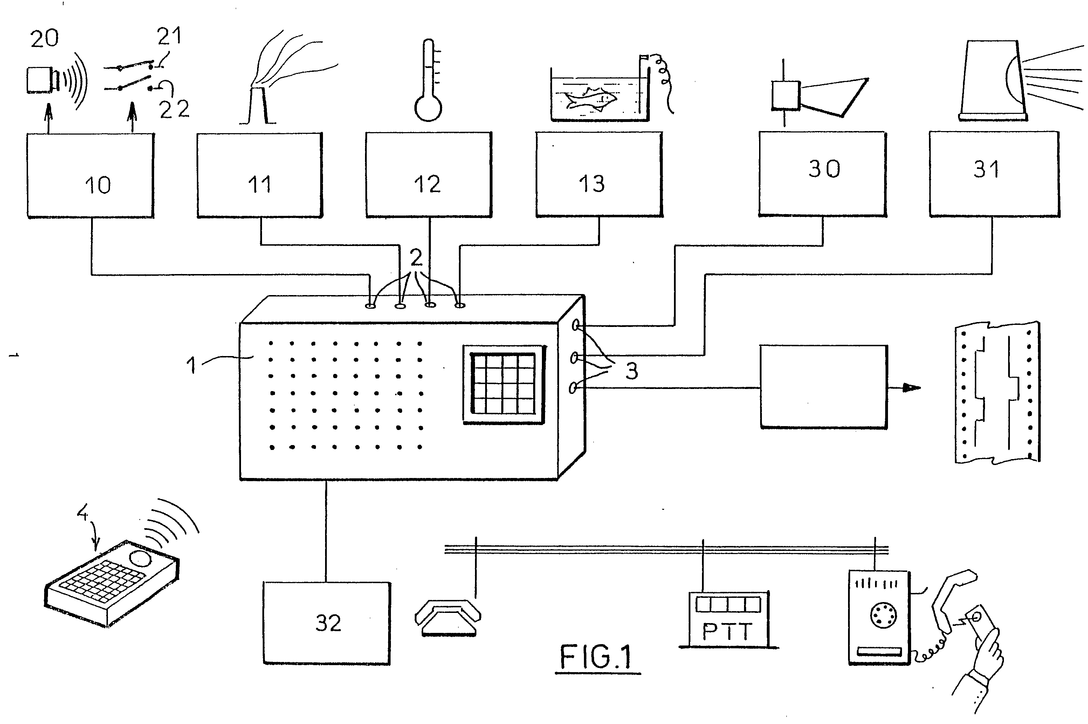

En s'appuyant sur la représentation très schématique de la figure 1, on peut mettre en évidence les différents composants d'une centrale de surveillance et d'alarme classique, et les caractéristiques nouvelles de la centrale selon l'invention.

L'ensemble principal 1 de la centrale se présente sous forme d'un coffret possédant un certain nombre de bornes d'entrée 2 et de bornes de sortie 3, et renfermant un certain nombre de composants électroniques pour le traitement des signaux provenant des bornes d'entrées 2, et la commande des signaux envoyés par les bornes de sortie 3.

A chacune des bornes d'entrée 2 peut être associée une zone de surveillance, consistant en un capteur relié électriquement à la borne. Ainsi, on a représenté en 10, 11, 12 et 13 quelques exemples non limitatifs de zones de surveillance équipées de capteurs. La zone 10 est par exemple une pièce d'habitation, protégée par un capteur à ultra-sons 20 ou encore par un simple contacteur, normalement fermé 21 ou normalement ouvert 22. La zone 10 peut également être protégée par plusieurs capteurs de même type ou de types différents.

La zone 11 constitue par exemple une zone de protection contre l'incendie et les zones 12 et 13 contre les variations de températures intempestives d'une chambre froide, d'un congélateur, ou d'un bocal à poissons par exemple.

On peut noter que ces capteurs peuvent détecter une effraction ou un danger, qui selon les cas doivent provoquer l'émission d'un signal d'alarme (malfaiteurs, incendie...), ou bien entraîner la mise en route d'un appareillage permettant de rétablir un équilibre dont la rupture a été détectée (mise en route du moteur auxiliaire d'un congélateur, ou d'un dispositif de réchauffage de l'eau d'un aquarium ; mise sur batterie lors d'une coupure de courant).

Les zones de surveillance connectées à la centrale peuvent être de types très divers, et présenter ainsi les caractéristiques suivantes :

— la zone est dite technique lorsque le déclenchement du capteur de surveillance entraîne la mise en route d'un dispositif autre qu'un dispositif d'alarme, par exemple un moteur ou un dispositif de chauffage, dont le fonctionnement peut être asservi à l'information fournie par le capteur ;

— une zone est dite éjectable lorsque le capteur ne peut être déclenché qu'une seule fois, et que la zone ne peut être mise à nouveau en surveillance que par reprogrammation de la centrale ;

— une zone est dite temporisée l'alarme ne se déclenche qu'après un certain temps suivant le signal d'alerte émis par le capteur (temporisation d'entrée), ou bien lorsque le capteur ne peut se déclencher et envoyer un signal d'alerte qu'après un certain temps suivant la mise en activité de la zone de surveillance (temporisation de sortie, permettant de quitter un domicile sans déclencher l'alarme).

De manière avantageuse, on peut également définir plusieurs modes de surveillance de la centrale, chaque mode correspondant à la mise en activité de certaines zones de surveillance particulières.

Ainsi, le mode « haute protection » peut correspondre à l'activation de quelques zones très sensibles seulement, même lorsque la centrale est au repos (salle des coffres...), alors qu'un mode « normal » de surveillance correspond à la mise en activité de toutes les zones de surveillance, qu'elles soient de haute protection ou de protection simple (surveillance des issues...).

L'une des caractéristiques importante de l'invention est de permettre à l'utilisateur de programmer lui-même pour chaque zone de surveillance, d'une part son type (technique, et/ou éjectable, et/ou temporisé), et d'autre part son mode de surveillance.

Ces paramètres de surveillance concernant les zones sont enregistrés dans une mémoire d'enregistrement placée à l'intérieur de l'ensemble principal 1 de la centrale.

Cette mémoire de surveillance enregistre également les autres paramètres de fonctionnement de la centrale. Il s'agit notamment de la référence des appareillages ou des alarmes 30, 31 activés par chaque capteur 10, 11, 12, 13. Dans le cas où la centrale est équipée d'une unité 32 de téléalarme téléphonée, la mémoire enregistre les numéros d'appel des correspondants à contacter. De manière avantageuse, plusieurs numéros d'appel peuvent être composés automatiquement par l'appareil, de façon à ce qu'en cas d'impossibilité de joindre un correspondant à un premier numéro, l'appareil puisse effectuer d'autres tentatives avec d'autres numéros d'appel, qui seront composés successivement suivant un cycle d'appel.

On dispose ainsi de trois types de moyens d'émission de signaux de commande et/ou d'alarme. Les signaux de commande émis en réponse à une information fournie par un capteur de surveillance d'une zone technique ; des signaux d'alarme locaux, émis en réponse à certaines formes d'effraction ou de danger laissées à l'appréciation de l'utilisateur ; les signaux d'alarme à distance, transmis automatiquement par ligne téléphonique.

Pour ce qui concerne ces derniers signaux l'information transmise peut être soit codée de façon à pouvoir être reçue à distance sur une imprimante, une console de visualisation, ou autre, soit vocale et directement intelligible par le correspondant dans le cas où la centrale est munie d'une unité de reconstitution de parole.

La souplesse remarquable de l'invention est donc liée au fait que l'utilisateur programme lui-même non seulement le type de chacune des zones de surveillance, et le mode de surveillance qu'il souhaite, mais encore le type d'alarme qu'il associe à la zone de surveillance. L'ensemble de ces choix de fonctionnement est effectué en introduisant dans l'appareil un certain nombre de « paramètres de surveillance », qui seront enregistrés dans la mémoire. Le fonctionnement de la centrale consistera donc à interroger cette mémoire, à chaque information d'alerte fournie par un capteur, pour réaliser la fonction technique ou d'alarme préprogrammée correspondante.

Cette mémoire est donc un composant nodal de la centrale et la souplesse apportée par la faculté de configurer la centrale très exactement aux besoins, ne doit pas pouvoir résulter en une augmentation de la vulnérabilité de l'appareil. Le choix du matériel assurant la fonction de mémorisation est en effet crucial, puisque d'une part le contenu de cette mémoire doit pouvoir être modifié par l'utilisateur dès qu'il le souhaite, et d'autre part ce même contenu ne doit absolument pas pouvoir être neutralisé par incident de fonctionnement ou par malveillance, sous peine de neutraliser l'ensemble de la centrale.

Cette exigence de conférer une haute fiabilité à la centrale a conduit l'inventeur à adopter deux solutions techniques qui convergent vers un optimum de sécurité :

— l'utilisation d'un circuit E$^2$PROM pour la réalisation de la mémoire ;

— la mise à la disposition de l'utilisateur d'une unité de télécommande et de téléprogrammation rapprochées, sous la forme d'un boîtier indépendant et portable.

Les mémoires E$^2$PROM se caractérisent par le fait qu'elles sont des mémoires ROM programmables, dont la modification du contenu ne peut être effectuée qu'après qu'une procédure d'identification assez complexe ait été suivie. Il en résulte que cette mémoire combine les deux qualités d'être une mémoire morte, et donc indépendante d'une source d'énergie, et d'être insensible aux parasites, puisque la probabilité est nulle que le parasitage corresponde au code d'identification ouvrant accès à la mémoire.

Le boîtier indépendant et portable de télécommande et de programmation assure à la fois une accessibilité permanente aux fonctions de surveillance et d'alarme de la centrale puisque sa maniabilié permet qu'il soit porté en permanence par l'utilisateur, avec une grande sélectivité des ordres de commande et de programmation du fait que la centrale elle-même peut rester tout à fait invisible et inaccessible, qu'un malfaiteur doit pouvoir se rendre maître de l'utilisateur pour lui confisquer le boîtier de commande, et que l'utilisation de ce boîtier suppose tout d'abord que l'on connaisse un code de reconnaissance particulier.

Il est à noter que, même dans le cas où le malfaiteur a pu se procurer le boîtier par la menace ou la force, il existe deux parades permettant de s'opposer à l'appropriation du boîtier indépendant et portable de la centrale selon l'invention.

Tout d'abord, l'utilisateur a la faculté, par une manœuvre simple et immédiate (par exemple en appuyant sur une touche unique d'urgence) de déclencher au choix un signal d'alarme local, ou un signal d'alarme à distance auprès des forces de l'ordre ou autre. Cette manœuvre rend bien évidemment caduque toute opération ultérieure de déprogrammation qui serait imposée à l'utilisateur par le malfaiteur. En second lieu, la destruction du boîtier indépendant et portable n'altère en rien le fonctionnement automatique de la centrale.

Le boîtier de télécommande et de téléprogrammation rapprochées est conçu pour envoyer des ordres et recevoir des informations dans un rayon d'action relativement faible autour de la centrale, par exemple quelques centaines de mètres. Cela signifie que l'utilisateur peut s'en servir dans toutes les pièces du bâtiment protégé, ainsi qu'à proximité immédiate du bâtiment. Au-delà de ce rayon d'aqction, la commande ou la programmation s'effectue par téléphone.

Le boîtier portable comporte un clavier pour la composition des ordres de commande et de programmation, un système d'émission/réception par ondes électromagnétiques permettant la communication entre le boîtier 4 et l'ensemble principal 1 de la centrale, et un haut-parleur délivrant les messages vocaux de guidage en provenance de l'ensemble principal de la centrale, et plus particulièrement de l'unité de reconstitution de paroles.

Le système d'émission/réception peut également fonctionner par ondes lumineuses ou par ondes sonores et plus particulièrement ultrasonores. Ces systèmes présentent les inconvénients d'une part d'être directifs, et d'autre part d'avoir une capacité de transport d'information inférieure aux ondes électromagnétiques. En revanche, ils sont favorables pour se protéger des perturbations de l'environnement. En effet, la transmission par ondes électromagnétiques doit réglementairement s'effectuer sur des fréquences particulières, généralement encombrées (radio amateurisme, radio-commande, radio-téléphones, ...). Pour les modes de réalisation utilisant les ondes lumineuses ou sonores, il est en outre tout à fait possible de pallier la faible capacité de transport de ces ondes en montant l'unité de reconstitution de paroles à l'intérieur du boîtier portable (et non dans le coffret de l'ensemble principal de la centrale). Les informations transitant entre le coffret principal et le boîtier portable sont donc beaucoup plus limitées et uniquement destinées à déclencher l'émission des messages vocaux directement à l'intérieur du boîtier portable.

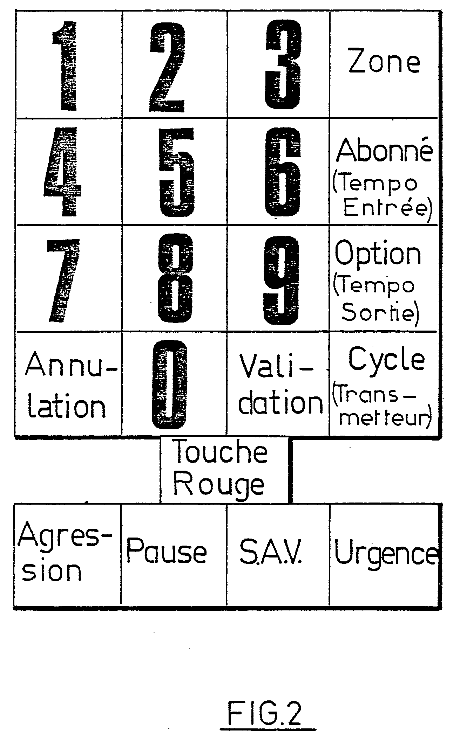

La figure 2 fournit un schéma indicatif d'un mode de réalisation possible du clavier du boîtier 4. Ce clavier comprend d'une part dix touches numériques correspondant chacune à un chiffre de 0 à 9, et un certain nombre de touches fonctionnelles, pour chacune desquelles on a laissé en figure 2 la mention de fonction telle qu'elle apparaîtra à l'utilisateur, et parmi lesquelles on distingue :

— des touches de programmation, à savoir la touche « zone » qui, associée à une ou plusieurs touches numériques permet de désigner une des zones de surveillance ; la touche « abonné » qui associée aux touches numériques permet de programmer les numéros de téléphone d'appel automatique, et de les référencer en cycles ; la touche « option » qui permet par exemple de valider ou de dévalider la sirène ou le répondeur téléphonique, ou encore de programmer la durée de fonctionnement de la sirène ; la touche « cycle transmetteur » qui permet de programmer l'ordre d'appel des abonnés téléphoniques dont les numéros de téléphone ont été enregistrés au moyen de la touche « abonné » suivant le type de détection (alarme, agression, urgence, ou technique),

— des touches de fonction immédiate, à savoir la touche « agression » coopérant avec des moyens d'alarme locaux, ou à distance (poste de police, vigile, ...) ; la touche « urgence » permettant de contacter téléphoniquement des services médicaux par exemple, ou encore la touche « SAV » (service après-vente) en cas de mauvais fonctionnement,

— des touches de décision, à savoir les touches « validation », et « annulation », permettant respectivement de confirmer ou d'annuler les ordres de programmation ou de fonction immédiate frappés au clavier ; une touche particulière, la « touche rouge » dont la fonction est expliquée plus loin.

La programmation des paramètres de surveillance de la centrale s'effectue suivant une procédure unique commune :

— l'utilisateur frappe tout d'abord les touches numériques correspondant à son « code secret » ;

— il appuie ensuite sur la touche de programmation correspondant à l'information qu'il souhaite introduire ou modifier ;

— il frappe enfin, la (ou les) touche(s) numérique(s) complémentaire(s).

Il est clair que la description précédente du clavier du boîtier 4 correspond à une réalisation illustrative de l'invention, mais que d'autres touches correspondant à des fonctions différentes peuvent être ajoutées.

Ainsi, par exemple, il peut être avantageux de rajouter une fonction d'écoute à distance, grâce à laquelle il est possible de connecter un microphone présent dans une pièce à protéger au système d'émission/réception, afin de surveiller discrètement la présence de bruits suspects ou autre. Il est également envisageable d'équiper la centrale de la fonction inverse, qui consisterait à donner la faculté au propriétaire se trouvant à distance de son domicile de parler par l'intermédiaire d'un haut parleur situé dans la pièce en question, par exemple afin d'effrayer d'éventuels cambrioleurs.

D'une manière plus générale, la centrale de surveillance et d'alarme peut également être équipée pour permettre d'effectuer des opérations de télémesure, par exemple de la température ambiante dans le bâtiment protégé, de la température de l'installation de chauffage, ou encore de la température des canalisations d'alimentation en eau courante en cas de risque de gel. Ces télémesures sont données à titre illustratif, et peuvent bien évidemment être étendues à d'autres domaines, et notamment à des relevés autres que de températures.

Enfin, il peut également être intéressant de pouvoir commander l'émission ou l'arrêt d'une sirène à distance, par exemple pour déconcerter et effrayer d'éventuels malfaiteurs.

Toutes ces fonctions peuvent aussi bien être accessibles à partir du boîtier portable, et donc dans un rayon d'action limité autour du bâtiment (ou autre) protégé, soit à partir d'un poste téléphonique sans limitation de distance. Dans ce cas, l'utilisateur peut avantageusement être équipé d'un clavier similaire à celui du boîtier portable de télécommande et de téléprogrammation rapprochées émettant par exemple des signaux sonores en multifréquence (cf système « D.T.M.F. »), ces signaux étant décodés dans le coffret de l'ensemble principal de la centrale, et reconnus comme correspondant à la frappe des touches de fonction effectuée par l'opérateur à distance.

Dans un mode de réalisation avantageux de l'invention, la centrale d'alarme et de surveillance est susceptible de prendre trois états différents, qu'elle peut prendre sur ordre de l'utilisateur :

— un état de repos total, dans lequel aucune zone n'est protégée, à l'exception de la centrale elle-même, dont les dispositifs d'autoprotection fonctionnent en permanence (chien de garde, ...) ;

— l'état de repos partiel, dans lequel la centrale se trouve en mode de surveillance « haute protection » dans lequel seules certaines zones très critiques sont surveillées (coffre-fort, ...) ;

— l'état de protection complète, dans lequel toutes les zones validées sont surveillées.

Le passage d'un état à l'autre s'effectue par exemple en frappant la touche « validation » après composition du numéro de code, le repos total étant obtenu par appui simultané sur la « touche rouge ».

Il est à noter que la fonction de repos total peut être supprimée pour certaines applications dans le cas où il est important que personne ne puisse neutraliser la centrale, par erreur ou par malveillance. Si parmi les paramètres de surveillance, les paramètres de fonctionnement passés en revue ci-dessus peuvent être programmés à partir du boîtier 4 indépendant et portable, les paramètres de configuration de la centrale sont programmables par intervention directe sur l'ensemble principal.

A cet effet, l'ensemble principal comporte par exemple un rotacteur à six positions, dont le positionnement correspond successivement à la configuration des zones temporisées, des zones techniques, et des zones éjectables, à l'enregistrement de l'état nominal des capteurs (état n'entraînant pas d'émission d'un signal de commande et/ou d'alarme), à la mise de la centrale en test, et enfin à sa mise en régime normal de fonctionnement, lors duquel les ordres de commande et de programmation des paramètres de fonctionnement peuvent être envoyés à partir du boîtier portable 4.

De manière avantageuse, l'ensemble principal de la centrale peut comporter une porte de fermeture masquant l'accès au rotacteur, cette porte ne pouvant être déverrouillée qu'après composition d'un numéro de code sur le boîtier 4.

Suivant un mode de réalisation de l'invention, l'ensemble principal de la centrale comporte un clavier identique à celui du boîtier 4 de façon à permettre la modification des paramètres de fonctionnement de la centrale à partir de l'ensemble principal, en cas de besoin.

De la même manière, l'ensemble principal peut comprendre également un haut-parleur similaire à celui du boîtier 4, pour l'émission des messages vocaux de guidage et d'assistance à la programmation, générés par l'unité de reconstitution de paroles.

La séquence de programmation de la mémoire d'enregistrement des paramètres de surveillance est donc celle décrite en préambule, et revendiquée en tant que procédé de fonctionnement de la centrale.

De manière avantageuse, la mémoire d'enregistrement des paramètres de surveillance mémorise systématiquement chacune des séquences de déclenchement d'alarme par une information d'alerte émise par un capteur quelconque, de façon à permettre la reprise des séquences d'alarme en cours, à la suite d'une interruption accidentelle ou malveillante de leur déroulement. Ces séquences d'alarme sont reprises à leur exacte étape d'interruption, et ce de manière pratiquement transparente pour l'utilisateur, dans la mesure où les opérations de réinitialisation sont quasi-instantanées, et peuvent donc largement s'insérer entre une série de micro-coupures successive du type de celles résultant d'un parasitage ou d'un brouillage.

Selon un mode de réalisation élaboré de l'invention, la centrale comporte une unité de mise en communication automatique par au moins une ligne téléphonique avec au moins un correspondant, ladite unité comprenant d'une part des moyens d'appel d'un correspondant et d'émission téléphonique desdits messages vocaux d'alarme et/ou de guidage, et d'autre part des moyens de réception téléphoniques d'ordres de commande et de programmation provenant d'un correspondant.

Il est avantageux de brancher la centrale de surveillance et d'alarme à plusieurs lignes téléphoniques de façon à pallier toutes pannes accidentelles ou malveillantes qui viendraient à se produire sur une des lignes.

Toutefois, et de manière encore plus avantageuse, la centrale de surveillance et d'alarme peut être munie d'une installation de radio-téléphonie, qui permet de se passer de câbles de liaison, lesquels sont un élément très vulnérable. Dans ce cas, cette installation de radio-téléphonie peut être complètement noyée et masquée en même temps que l'ensemble principal de la centrale, et fonctionner de manière parfaitement discrète, à l'insu des malfaiteurs. L'opération de basculement d'une ligne téléphonique sur une autre, ou sur le radio-téléphone est réalisée de manière interne, et fait partie des moyens d'autoprotection de la centrale.

La centrale de surveillance et d'alarme selon l'invention peut donc comporter une multiplicité de fonctions dont certaines sont optionnelles, et pour lesquelles on s'est efforcé de placer les composants physiques correspondants sur des supports individuels connectables à l'intérieur de l'ensemble principal 1. Il en résulte que chaque utilisateur peut se procurer les cartes-fonctions correspondantes à ses besoins. La centrale est donc de conception modulaire pour en accroître la souplesse de fonctionnement et l'adaptabilité.

Il est clair que toutes les opérations réalisées au moyen du boîtier (4) portable de télécommande et de téléprogrammation rapprochée peuvent également être effectuées par ligne téléphonique. Dans ce cas, l'utilisateur peut disposer d'un boîtier portant un clavier similaire au clavier du boîtier (4), chaque touche commandant l'émission d'un signal électrique, par exemple au moyen d'un dispositif « DTMF » (codage multifréquence), qui sera décodé par l'ensemble principal (1) de la centrale.

Le correspondant reçoit alors également les messages vocaux d'alarme et/ou de guidage émis par la centrale.

Enfin, il est à noter que des messages vocaux d'alarme particuliers sont prévus pour être émis auprès des services compétents lorsque l'utilisateur emploie le boîtier (4) en télécommande rapprochée, par pression sur l'une des touches de fonction immédiate (agression, urgence, service après-vente).

## Revendications

1. Centrale modulaire de surveillance et d'alarme de haute sécurité, notamment pour l'asservissement d'un appareillage ou d'une alarme en réponse à une effraction, un danger et/ou un ordre préprogrammé, du type comprenant une mémoire d'enregistrement de paramètres de surveillance, au moins un capteur de surveillance et/ou d'alarme informant sur l'état d'une zone de surveillance, des moyens d'émission d'un signal de commande et/ou d'alarme actionnés par un processeur central en fonction desdits paramètres de surveillance enregistrés et à partir des informations fournies par lesdits capteurs,
ladite centrale comportant en outre des moyens de programmation, par l'utilisateur, desdits paramètres de surveillance contenus dans ladite mémoire, selon un processus de guidage pas à pas et interactif de l'utilisateur, et une unité de reconstitution de paroles, coopérant d'une part avec les moyens d'émission de signal d'alarme pour associer à chaque signal un message vocal d'alarme, et d'autre part avec lesdits moyens de programmation pour assurer le guidage de l'utilisateur par message vocal de guidage,
caractérisée en ce que les moyens de programmation desdits paramètres de surveillance comprennent un boîtier (4) indépendant et portable de télécommande et de téléprogrammation rapprochée, comportant un clavier pour la composition des ordres de commande et de programmation, un système d'amission/réception par ondes électromagnétiques et/ou lumineuses et/ou sonores pour la communication entre ledit boîtier (4) et l'ensemble principal (1) de la centrale, et un haut-parleur délivrant les messages vocaux de guidage en provenance de l'ensemble principal (1) de la centrale.

2. Centrale de surveillance et d'alarme selon la revendication 1, caractérisée en ce que la mémoire d'enregistrement des paramètres de surveillance est du type $E^2$ PROM.

3. Centrale de surveillance et d'alarme selon la revendication 1, caractérisée en ce que ladite centrale comporte une unité de mise en communication automatique, par au moins une ligne téléphonique, de la centrale avec au moins un correspondant, ladite unité comprenant d'une part des moyens d'appel d'un correspondant et d'émission téléphonique desdits messages vocaux d'alarme et/ou de guidage, et d'autre part des moyens de réception téléphonique d'ordres de commande et de programmation en provenance d'un correspondant.

4. Centrale de surveillance et d'alarme selon la revendication 3, caractérisée en ce que le boîtier (4) indépendant et portable comporte au moins une touche d'appel d'urgence, commandant l'émission téléphonique immédiate d'un message vocal d'alarme auprès d'un correspondant compétent, par l'intermédiaire de ladite unité de mise en communication téléphonique.

5. Centrale de surveillance et d'alarme selon la revendication 3, caractérisée en ce que l'unité de mise en communication automatique comprend une installation de radio-téléphone.

6. Procédé de fonctionnement d'une centrale de surveillance et d'alarme de haute sécutié, centrale du type comprenant une mémoire d'enregistrement de paramètres de surveillance, au moins un capteur de surveillance et/ou d'alarme informant sur l'état de la zone de surveillance (10, 11, 12, 13), des moyens de programmation, par l'utilisateur, desdits paramètres de surveillance contenus dans ladite mémoire, lesdits moyens de programmation desdits paramètres de surveillance comprenant au moins un boîtier (4) indépendant et portable de télécommande et de téléprogrammation rapprochée comportant un clavier, un système d'émission/réception par ondes électromagnétiques et/ou lumineuses et/ou sonores pour la communication entre ledit boîtier (4) et l'ensemble principal (1) de la centrale et un haut-parleur délivrant les messages vocaux de guidage en provenance de l'ensemble principal (1) de la centrale,
caractérisée en ce que la programmation de la mémoire d'enregistrement des paramètres de surveillance comprend les étapes suivantes :
on configure chacune des zones de surveillance (10, 11, 12, 13) de façon à lui attribuer un niveau de protection (ou mode de surveillance), et un type de protection, ladite configuration étant effectuée par intervention directe sur l'ensemble principal (1) de la centrale,
on enregistre la position repos de chacun des capteurs d'alarme des zones de surveillance (10, 11, 12, 13) en plaçant simultanément chacune desdites zones de surveillance dans leur état physique nominal, ledit enregistrement étant effectué par intervention directe sur l'ensemble principal de la centrale,
on verrouille l'ensemble principal (1) de façon à protéger l'accès aux moyens de programmation de ladite mémoire, le déverrouillage n'étant possible qu'après composition d'un numéro de code sur le boîtier (4) indépendant et portable,
on commande la mise en activité ou la mise hors surveillance de chacune des zones de surveillance (10, 11, 12, 13) au moyen dudit boîtier (4) indépendant et portable, soit par définition du niveau de protection (mode de surveillance) soit par validation sélective de chacune des zones (10, 11, 12, 13), l'une et l'autre de ces opérations étant guidées par les messages vocaux émis par le haut-parleur dudit boîtier (4).

7. Procédé de fonctionnement d'une centrale de surveillance et d'alarme selon la revendication 6, ladite centrale comprenant en outre une unité de mise en communication automatique, par au moins une ligne téléphonique de la centrale avec au moins un correspondant,
procédé caractérisé en ce que l'on programme les numéros téléphoniques de cycles d'appel de correspondants pour la télé-alarme, au moyen dudit boîtier (4) indépendant et portable.

8. Procédé de fonctionnement d'une centrale de surveillance et d'alarme selon la revendication 6, caractérisé en ce que ladite mémoire d'enregistrement des paramètres de surveillance mémorise systématiquement chaque étape des séquences de déclenchement d'alarme de façon à en permettre la reprise après interruption accidentelle et/ou malveillante à l'étape exacte d'interruption.

9. Procédé de fonctionnement d'une centrale de surveillance et d'alarme selon la revendication 7, ladite unité de mise en communication comprenant une installation de radio-téléphone, procédé caractérisé en ce que l'installation de radio-téléphone est automatiquement utilisée pour l'émission des messages vocaux d'alarme à distance lorsque toutes les lignes téléphoniques sont coupées.

## Claims

1. High-security modular monitoring and alarm centre, notably for the automatic control of an installation or of an alarm in response to an intrusion, a danger and/or a pre-programmed order, of the type comprising a memory for recording monitoring-parameters, at least one monitoring- and/or alarm- sensor providing information concerning the state of a monitoring zone, means for emitting a control- and/or alarm-signal, actuated by a central processor in dependence upon the said recorded monitoring-parameters and on the basis of the data provided by the said sensors, the said centre furthermore comprising means for programming, by the user, of the said monitoring-parameters contained in the said memory, in accordance with a step-by-step and interactive guiding process of the user, and a unit for the reconstitution of words, co-operating on the one hand with the means for emission of the alarm signal, for associating a vocal alarm message with each signal, and of the other hand with the said programming means, for ensuring the user's guiding by vocal guiding message, characterised in that the means for programming of the said monitoring-parameters comprise an independent and portable housing (4) for remote control and for fine-tuned tele-programming, comprising a keyboard for dialling control- and programming- orders, a system for transmitting/receiving by means of electromagnetic and/or luminous and/or sound waves, for the communication between the said housing (4) and the principal assembly (1) of the centre, and a loudspeaker delivering the vocal guiding-messages originating from the principal assembly (1) of the centre.

2. Monitoring and alarm centre according to claim 1, characterised in that the memory for recording monitoring-parameters is of the $E^2$ PROM type.

3. Monitoring and alarm centre according to claim 1, characterised in that the said centre comprises a unit for establishing automatic communication, by at least one telephonic line, between the centre and at least one correspondent, the said unit comprising, on the one hand, means for calling a correspondent and for telephonic emission of the said vocal alarm- and/or guiding-messages, and, on the other hand, means for telephonic reception of control- and programming- orders originating from a correspondent.

4. Monitoring and alarm centre according to claim 3, characterised in that the independent and portable housing (4) comprises at least one emergency-call key, controlling the immediate telephonic emission of a vocal alarm message in a competent correspondent, by the intermediary of the said unit for establishing telephonic communication.

5. Monitoring and alarm centre according to claim 3, characterised in that the unit for establishing automatic communication comprises a radio-telephone installation.

6. Operating method for a high-security monitoring and alarm centre, the centre being of the type comprising a memory for recording monitoring-parameters, at least one monitoring- and/or alarm- sensor providing information concerning the state of a monitoring zone (10, 11, 12, 13), means for programming, by the user, of the said monitoring-parameters contained in the said memory, the said means for programming of the said monitoring-parameters comprising at least one independent and portable housing (4), for remote control and for fine-tuned tele-programming, comprising a keyboard, a system for transmitting/receiving by means of electromagnetic and/or luminous and/or sound waves, for the communication between the said housing (4) and the principal assembly (1) of the centre, and a loudspeaker delivering the vocal guiding-messages originating from the principal assembly (1) of the centre,

characterised in that the programming of the memory for recording the monitoring-parameters comprises the following stages :

each of the monitoring zones (10, 11, 12, 13) is configured in such a manner as to confer upon it a level of protection (or monitoring mode), and a type of protection, the said configuration being effected by direct intervention on the principal assembly (1) of the centre,

the rest position of each of the alarm sensors of the monitoring zones (10, 11, 12, 13) is recorded by simultaneously placing each of the said monitoring zones in their nominal physical state, the said recording being effected by direct intervention on the principal assembly of the centre,

the principal assembly (1) is locked in such a manner as to protect the access to the means for programming the said memory, the unlocking only being possible after a code number has been dialled on the independent and portable housing (4),

the setting into activity, or the setting into a non-monitoring state, of each of the monitoring zones (10, 11, 12, 13), is controlled by means of the said independent and portable housing (4), either by defining the level of protection (monitoring mode), or by selective validation of each of the zones (10, 11, 12, 13), both these operations being guided by the vocal messages emitted by the loudspeaker of the said housing (4).

7. Operating method for a monitoring and alarm centre according to claim 6, the said centre furthermore comprising a unit for establishing automatic communication, by at least one telephonic line of the centre, with at least one correspondent,
method characterised in that the telephonic numbers of the call cycles of correspondents for the tele-alarm are programmed by means of the said independent and portable housing (4).

8. Operating method for a monitoring and alarm centre according to claim 6, characterised in that the said memory for recording the monitoring parameters systematically memorises each stage of the alarm release sequences, in such a manner as to make possible the resumption thereof, after an interruption which is accidental or is the result of foul play, at the exact stage when the interruption occurred.

9. Operating method for a monitoring and alarm centre according to claim 7, the said unit for establishing communication comprising a radio-telephone installation,
method characterised in that the radio-telephone installation is automatically utilised for long-distance emission of the vocal alarm messages when all the telephonic lines are cut.

**Patentansprüche**

1. Modulare Überwachungs- und Alarmzentrale großer Sicherheit, insbesondere zur Steuerung einer Apparatur oder eines Alarms in Abhängigkeit von einem Einbruch, einer Gefahr und/oder einem vorprogrammierten Befehl, und zwar jener Art, die einen Speicher zur Aufzeichnung von Überwachungsparametern, mindestens einen Überwachungs- und/oder Alarmmeßfühler, der eine Information über den Zustand einer Überwachungszone liefert, und eine Einrichtung zur Abgabe eines Steuer- und/oder Alarmsignals aufweist, die von einem zentralen Prozessor als Funktion der genannten, aufgezeichneten Überwachungsparameter und ausgehend von jenen Informationen gesteuert wird, die durch die genannten Meßfühler geliefert werden,
wobei die Zentrale außerdem eine Einrichtung zum Programmieren der genannten, im Speicher enthaltenen Überwachungsparameter durch den Benutzer gemäß einem schrittweisen und in Wechselbeziehung mit dem Benutzer stehendem Verfahren sowie eine Einheit zur Bildung von Wörtern aufweist, die einerseits mit der Einrichtung zur Abgabe des Alarmsignals zusammenwirkt, um jedem Signal eine gesprochene Alarmnachricht zuzuordnen, sowie andererseits mit der genannten Programmiereinrichtung, um die Führung des Benutzers durch eine gesprochene Führungsnachricht sicherzustellen,
dadurch gekennzeichnet, daß die Programmiereinrichtung für die genannten Überwachungsparameter ein unabhängiges und tragbares Gehäuse (4) zur Fernsteuerung und zur kurz darauf folgenden Fernprogrammierung aufweist, mit einer Tastatur zur Zusammenstellung von Steuer- und Programmierbefehlen, eine Sende- und Empfangsanlage für elektromagnetische Wellen und/oder Lichtwellen und/oder Schallwellen, für die Verbindung zwischen dem Gehäuse (4) und der Hauptgruppe (1) der Zentrale, und einen Lautsprecher, der die Schall-Führungsnachrichten, die von der Hauptgruppe (1) der Zentrale herkommen, abgibt.

2. Überwachungs- und Alarmzentrale nach Anspruch 1, dadurch gekennzeichnet, daß der Speicher zur Aufzeichnung der Überwachungsparameter dem Typ $E^2$ PROM angehört.

3. Überwachungs- und Alarmzentrale nach Anspruch 1, dadurch gekennzeichnet, daß die Zentrale eine automatische Einheit zur Herstellung einer Verbindung über mindestens eine Telefonleitung von der Zentrale mit mindestens einer Gesprächsperson aufweist, wobei die Einheit einerseits eine Einrichtung zum Anrufen einer Gesprächsperson und zur telefonischen Absendung der genannten Alarm- und/oder Führungs-Schallnachrichten sowie andererseits eine Einrichtung zum telefonischen Empfang von Steuerbefehlen und Programmierbefehlen aufweist, die von einer Gesprächsperson ausgehen.

4. Überwachungs- und Alarmzentrale nach Anspruch 3, dadurch gekennzeichnet, daß das unabhängige und tragbare Gehäuse (4) mindestens eine Notruftaste aufweist, die die unverzügliche telefonische Absendung einer gesprochenen Alarmnachricht an einen zuständigen Gesprächspartner mittels der genannten Einheit zur Herstellung einer telefonischen Verbindung steuert.

5. Überwachungs- und Alarmzentrale nach Anspruch 3, dadurch gekennzeichnet, daß die Einheit zum Herstellen einer automatischen Verbindung eine Funktelefoneinrichtung aufweist.

6. Betriebsverfahren für eine Überwachungs- und Alarmzentrale hoher Sicherheit mit einem Speicher zur Aufzeichnung von Überwachungsparametern, mindestens einem Überwachungs- und/oder Alarmmeßfühler, der eine Information über den Zustand der Überwachungszone (10, 11, 12, 13) liefert, einer Einrichtung zum Programmieren der genannten, in Speicher enthaltenen Überwachungsparameter durch den Benutzer, wobei die Programmiereinrichtung für die genannten Überwachungsparameter zumindest ein unabhängiges und tragbares Gehäuse (4) zur Fernsteuerung und zur kurz darauf folgenden Fernprogrammierung aufweist mit einer Tastatur, einer Sende/Empfangsanlage für elektromagnetische Wellen und/oder Lichtwellen und/oder Schallwellen für die Verbindung zwischen dem Gehäuse (4) und der Hauptgruppe (1) der Zentrale und einem Lautsprecher, der die Schallzuführungsnachrichten, die von der Hauptgruppe (1) der Zentrale kommen, abgibt, dadurch gekennzeichnet, daß die Programmierung des Aufzeichnungsspeichers mit Überwachungsparametern die folgenden

Schritte aufweist :

man bezeichnet jede der Überwachungszonen (10, 11, 12, 13) auf eine solche Weise, daß man ihr eine Schutzstufe (oder eine Überwachungsart) und ein Schutzmuster zuteilt, wobei die Bezeichnung durch unmittelbaren Eingriff in die Hauptgruppe (1) der Zentrale bewirkt wird,

man zeichnet die Ruhelage eines jeden Alarmmeßfühlers der Überwachungszonen (10, 11, 12, 13) dadurch auf, daß man gleichzeitig jeder der genannten Überwachungszonen in ihren normalen physischen Zustand versetzt, wobei die Aufzeichnung durch unmittelbaren Eingriff in die Hauptgruppe der Zentrale bewirkt wird,

man sperrt die Hauptgruppe (1) auf eine solche Weise, daß der Zugang zu den Programmierungseinrichtungen des genannten Speichers geschützt ist, wobei die Aufhebung der Sperre nur nach Zusammensetzung einer Codenummer an dem unabhängigen und tragbaren Gehäuse (4) möglich ist,

man steuert die Aktivierung oder die Aufhebung der Überwachung einer jeden der Überwachungszonen (10, 11, 12, 13) mittels des genannten unabhängigen und tragbaren Gehäuses (4) entweder durch die Festlegung der Schutzstufe (Überwachungsbetriebsart) oder durch wahlweise Inbetriebnahme jeder der Zonen (10, 11, 12, 13), wobei die eine oder andere dieser Tätigkeiten durch gesprochene Nachrichten geführt wird, die vom Lautsprecher des Gehäuses (4) ausgesandt werden.

7. Betriebsverfahren für eine Überwachungs- und Alarmzentrale nach Anspruch 6, wobei die Zentrale unter anderem eine automatische Einheit zur Herstellung einer Verbindung über mindestens eine Telefonleitung von der Zentrale mit mindestens einer Gesprächsperson aufweist, dadurch gekennzeichnet, daß man die Telefonnummern für den Vorgang des Anrufs eines Gesprächspartners für den Fernalarm mittels des unabhängigen und tragbaren Gehäuses (4) programmiert.

8. Betriebsverfahren für eine Überwachungs- und Alarmzentrale nach Anspruch 6, dadurch gekennzeichnet, daß der Aufzeichnungsspeicher für die Überwachungsparameter systematisch jeden Schritt der Folge zur Auslösung des Alarms auf eine solche Weise einspeichert, daß die Wiederaufnahme nach der versehentlichen und/oder böswilligen Unterbrechung bei der genauen Stufe der Unterbrechung ermöglicht ist.

9. Betriebsverfahren für eine Überwachungs- und Alarmzentrale nach Anspruch 7, wobei die Einheit zur Herstellung einer Verbindung eine Funktelefoneinrichtung aufweist, dadurch gekennzeichnet, daß die Funktelefoneinrichtung automatisch verwendet wird, um gesprochene Alarmnachrichten dann fernzuübertragen, wenn alle Telefonleitungen unterbrochen sind.

FIG.1

| 1 | 2 | 3 | Zone |
|---|---|---|------|
| 4 | 5 | 6 | Abonné<br>(Tempo<br>Entrée) |
| 7 | 8 | 9 | Option<br>(Tempo<br>Sortie) |
| Annu-<br>lation | 0 | Vali-<br>dation | Cycle<br>(Trans-<br>metteur) |

| | Touche<br>Rouge | | |
|---|---|---|---|
| Agres-<br>sion | Pause | S.A.V. | Urgence |

## FIG.2